# EUROPEAN PATENT APPLICATION

(11) **EP 1 962 501 A1**
(43) Date of publication of application: **27.08.2008**
(21) Application number: 08151701.3
(22) Date of filing: 20.02.2008
(51) Int. Cl.: H04N 5/232, H04N 1/00, H04N 101/00

(54) **Portable electronic device**

(30) Priority: 20.02.2007 JP 2007039829; 07.01.2008 JP 2008000809
(71) Applicant: Canon Kabushiki Kaisha, Ohta-Ku, Tokyo 146-8501 (JP)
(72) Inventor: Hitosuga, Emi, Ohta-ku, Tokyo (JP)
(74) Representative: Sharp, Alan Cooper

(57) **Abstract**

A portable electronic device (100) includes a display unit (39) which displays, simultaneously side by side, a plurality of main items (331) aligned in one direction as the setting items of the portable electronic device and a plurality of sub items (332) aligned in the one direction as the setting items of the lower layer of the main items, a first rotary dial (221) which selects at least one of the plurality of main items, and a second rotary dial (222) which selects at least one of the plurality of sub items. The first and second rotary dials are arranged while making their rotation axes parallel to each other and perpendicular to the one direction.

## Description

### BACKGROUND OF THE INVENTION

### Field of the Invention

The present invention relates to a technique of improving operability in selecting a display item displayed on the display device of a portable electronic device having a plurality of dials.

### Description of the Related Art

A conventional portable electronic device and, more particularly, an image capturing apparatus such as a digital camera, uses a plurality of rotary dials as operation members, as is well known.

A user can perform operations of, e.g., setting exposure of the digital camera, advancing the page of a playback image, and selecting a menu item by operating these rotary dials.

Related references are Japanese Patent Laid-Open Nos. 2003-242004, 2005-038414, and 10-222967.

Recent digital cameras have a variety of functions and many settable items, and the camera setting operation can become cumbersome.

Under these circumstances, a conventional digital camera having a plurality of rotary dials uses only one of them to, for example, allow a user to select a menu item. Hence, there is room to improve operability in selecting a menu item.

### SUMMARY OF THE INVENTION

The present invention has been made in consideration of the above-described problem, and has as its object to efficiently set each function of a portable electronic device having a plurality of rotary dials for operations.

According to a first aspect of the present invention, there is provided a portable electronic device as claimed in claims 1 to 8.

Further features of the present invention will become apparent from the following description of exemplary embodiments with reference to the attached drawings.

### BRIEF DESCRIPTION OF THE DRAWINGS

Fig. 1 is a block diagram showing the arrangement of a digital camera according to an embodiment of a portable electronic device of the present invention.

Fig. 2A is a view showing the outer appearance of the digital camera in Fig. 1 viewed from the rear side.

Fig. 2B is a view of the main body of the digital camera viewed from the upper side.

Fig. 3 is a view showing menu main items displayed on an image display unit and sub items of a selected main item.

Fig. 4 is a view showing an alternative display in which the sub items in Fig. 3 are replaced with shooting information such as exposure information on shooting images;

Fig. 5 is a flowchart illustrating an operation of automatically scrolling the sub items in Fig. 3 when the second rotary dial is not operated;

Figs. 6A and 6B are views showing a sub item selection method;

Fig. 7 is a flowchart illustrating an operation of selecting a main item and a sub item shown in Fig. 3;

Fig. 8 is a view showing a menu window displayed in step S502 in Fig. 7;

Fig. 9A is a view for explaining the operation in steps S507 and S508 in Fig. 7;

Fig. 9B is a view for explaining the operation in step S510 in Fig. 7; and

Fig. 10 is a view showing a state in which a menu main item is selected as a setting item of the digital camera function, and sub items are displayed as contents belonging to the main item.

### DESCRIPTION OF THE EMBODIMENTS

A preferred embodiment of the present invention will be described below in detail with reference to the accompanying drawings.

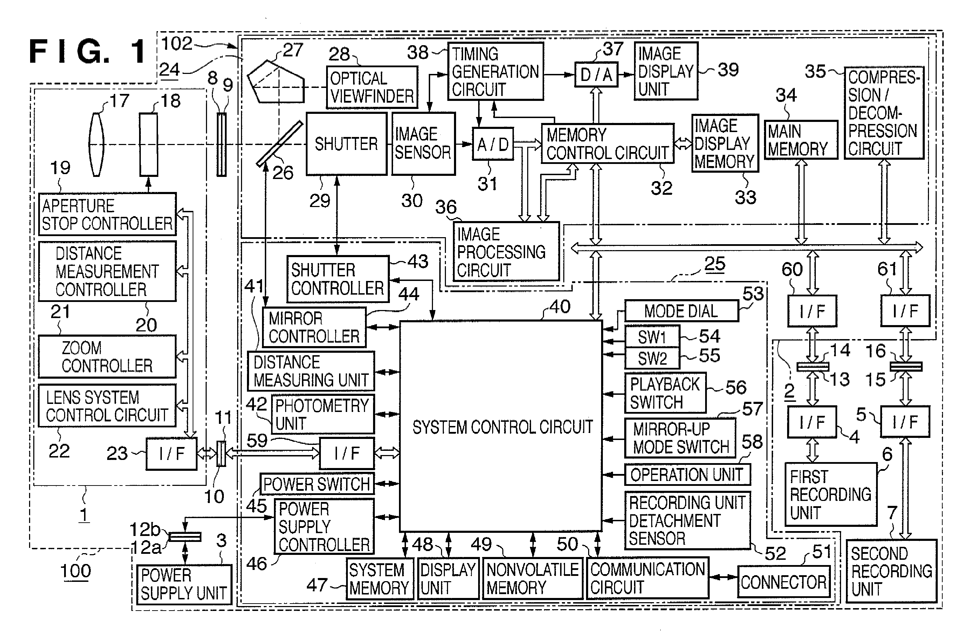

Fig. 1 is a block diagram showing the arrangement of a digital camera according to an embodiment of a portable electronic device of the present invention.

Referring to Fig. 1, a digital camera 100 comprises a main body 102, and an interchangeable lens unit 1 detachable from the main body 102. The main body 102 comprises an image processing unit 2 which captures object light from the lens unit 1, and a power supply unit 3 which supplies power to the image processing unit 2. The power supply unit 3 includes a primary cell such as an alkaline cell or lithium cell, or a secondary cell such as an NiCd cell, NiMH cell, or Li ion cell. The main body 102 has first and second recording units 6 and 7 including a memory card or hard disk connected to the image processing unit 2 via interface (I/F) units 4 and 5.

The lens unit 1 and main body 102 are connected to each other mechanically via lens mounts 8 and 9 and electrically via connectors 10 and 11. The lens mount 9 or connector 11 on the side of the main body 102 incorporates a lens detachment sensor (not shown) which detects the presence/absence of attachment of the lens unit 1.

The power supply unit 3 and main body 102 are electrically connected to each other via connectors 12a and 12b. The I/F units 4 and 5 connected to the first and second recording units 6 and 7 are electrically connected to the main body 102 via connectors 13, 14, 15, and 16. In this embodiment, the power supply unit 3 includes a battery. However, it may include any other power supply means such as an AC adapter.

More specifically, the lens unit 1 comprises a photographing lens 17 which receives light (i.e an object image) from an object, and an aperture stop 18 which changes the aperture size to adjust the light amount of the object image. The lens unit 1 also comprises an aperture stop controller 19 which controls the aperture size of the aperture stop 18 in cooperation with a shutter controller (to be described later) on the basis of photometry information from a photometry unit 42 (to be described later) in the main body 102. The lens unit 1 also comprises a distance measurement controller 20 which controls focusing of the photographing lens 17, and a zoom controller 21 which controls zooming of the photographing lens 17. The lens unit 1 also comprises a lens system control circuit 22 which controls the entire lens unit 1, and an I/F unit 23 which controls the interface operation between the lens unit 1 and the main body 102.

The lens system control circuit 22 comprises a memory which stores constants, variables, and programs for operations, and a nonvolatile memory which holds identification information unique to the lens unit 1, management information, functional information such as the open and largest f-numbers and a focal length, and current and past set values.

The connector 10 can transmit control signals, state signals, and data signals between the main body 102 and the lens unit 1 and also bidirectionally supply various kinds of currents. Note that the connector 10 may be designed to enable not only telecommunication but also optical communication or speech communication.

The image processing unit 2 in the main body 102 comprises an image processing block 24 which processes an optical signal from the lens unit 1 as image data, and a system control block 25 which controls the system of the entire digital camera.

More specifically, the image processing block 24 comprises a quick return mirror 26, pentaprism 27, and optical viewfinder 28 which forms an image of light that has passed via the quick return mirror 26 and pentaprism 27 and displays the image. The image processing block 24 also comprises a shutter 29 which controls the exposure time, an image sensor 30 which accumulates charges from the optical image and converts the optical image into an electrical signal, and an A/D converter 31 which converts an analog electrical signal output from the image sensor 30 into a digital electrical signal. The image processing block 24 also comprises a memory control circuit 32 which controls the entire image processing block 24, an image display memory 33 in which image display data is written via the memory control circuit 32, and a main memory 34 which stores captured still images and moving images. The image processing block 24 also comprises a compression/decompression circuit 35 which compresses or decompresses image data stored in the main memory 34 by using, for example, adaptive discrete cosine transformation (ADCT). The image processing block 24 also comprises an image processing circuit 36 which executes predetermined pixel interpolation, color conversion, and other arithmetic processes for image data for the A/D converter 31 or memory control circuit 32. The image processing block 24 also comprises a D/A converter 37 which converts an output signal (digital electrical signal) from the memory control circuit 32 into an analog electrical signal. The image processing block 24 also comprises a timing generation circuit 38 which supplies a clock signal or control signal to the image sensor 30, A/D converter 31, and D/A converter 37 under the control of the memory control circuit 32. The image processing block 24 also comprises an image display unit 39 formed from, e.g., a TFT-LCD that displays image display data written in the image display memory 33. When captured image data is successively displayed on the image display unit 39, an electronic viewfinder function can be implemented. The image display unit 39 can arbitrarily turn the display on or off in accordance with an instruction from a system control circuit 40 (to be described later). When the display is turned off, the power consumption of the image processing unit 2 can largely be reduced.

The main memory 34 has a storage capacity enough to store a predetermined number of still images or a moving image of a predetermined duration. This enables a large quantity of image data to be written quickly even in continuous shooting or panoramic shooting for continuously shooting a plurality of still images. Note that the main memory 34 is also usable as the work area of the system control circuit 40 (to be described later).

The above-described optical viewfinder 28 has predetermined display functions, and displays various kinds of information such as in-focus, ready for shooting, camera shake warning, shutter speed/f-number, exposure compensation, and recording medium write operation.

The system control block 25 is formed by connecting a number of constituent elements to the system control circuit 40 that controls the entire system of the image processing unit 2.

A distance measuring unit 41 measures the focus state of an optical image received from the lens unit 1 via the quick return mirror 26 and a sub-mirror (not shown) for distance measurement, i.e., executes an AF (Auto Focus) process.

The photometry unit 42 measures the exposure state of an optical image received from the lens unit 1 via the quick return mirror 26 and a lens (not shown) for photometry, i.e., executes an AE (Auto Exposure) process.

A shutter controller 43 controls the shutter 29 in cooperation with the aperture stop controller 19 that controls the aperture stop 18 on the basis of photometry information from the photometry unit 42.

A mirror controller 44 controls driving of the quick return mirror 26 in accordance with a signal from the system control circuit 40.

The system control circuit 40 also executes the AF process, AE process, and EF process by TTL (Through The Lens) scheme for the distance measuring unit 41, photometry unit 42, and shutter controller 43 on the basis of an arithmetic result obtained from the image processing circuit 36. The system control circuit 40 also executes an AWB (Automatic White Balance) process.

A power switch 45 allows a user to selectively set the power ON mode or power OFF mode of the main body 102. The power switch 45 can also be used to selectively set the power ON mode or power OFF mode of each of various accessories including the lens unit 1, external electronic flash, and first and second recording units 6 and 7 connected to the main body 102.

A power supply controller 46 including a cell detection circuit, DC/DC converter, and change-over switch which switches the part to be energized detects the presence/absence of attachment of a cell serving as the power supply unit 3, the type of cell, and the battery level. The power supply controller 46 controls the DC/DC converter on the basis of the detection result or an instruction from the system control circuit 40 and supplies a necessary voltage to the units including the first and second recording units 6 and 7 for a required period.

A system memory 47 stores constants, variables, and programs for operations of the system control circuit 40.

A display unit 48 includes a liquid crystal display (LCD), light-emitting diodes (LEDs), lamps, and speaker and presents an operation state or message using a text, image, or sound in accordance with program execution in the system control circuit 40. The display unit 48 is arranged at a single or a plurality of visible positions near an operation unit (to be described later).

The LCD of the display unit 48 displays, e.g., single shot/continuous shooting, self timer, compression ratio, number of recording pixels, number of recorded images, number of recordable images, shutter speed, f-number, exposure compensation, red eye mitigation, macro shooting, and buzzer setting. The clock battery level, battery level, error message, information by a plurality of digits, the attached states of the first and second recording units 6 and 7, the attached state of the lens unit 1, the operation of a communication circuit (to be described later), date/time, and the connection state of an external computer can also be displayed.

The LEDs of the display unit 48 indicate, e.g., in-focus, ready for shooting, camera shake warning, recording medium write operation, macro shooting settings, and secondary cell charge state.

The lamps of the display unit 48 include, e.g., a self timer notification lamp. The self timer notification lamp can also be used as AF auxiliary light.

A nonvolatile memory 49 is an electrically erasable and programmable memory including, e.g., an EEPROM.

A communication circuit 50 has various kinds of communication functions such as RS232C, IEEE1394, P1284, SCSI, modem, LAN, and wireless communication.

A connector 51 connects the main body 102 to another external device via the communication circuit 50. When the communication circuit 50 has a wireless communication function, an antenna is connected to the communication circuit 50 in place of the connector 51.

A recording unit detachment sensor 52 detects whether the connectors 13 and 15 are attached to the connectors 14 and 16.

Operation members such as a mode dial 53, first and second shutter switches 54 and 55, playback switch 56, mirror-up mode switch 57, and operation unit 58 are connected to the system control circuit 40 and instruct it to execute various operations.

The mode dial 53 can select a shooting mode. Possible shooting modes include an automatic shooting mode, programmed shooting mode, shutter speed priority shooting mode, aperture priority shooting mode, manual shooting mode, focal depth priority (depth) shooting mode, and panoramic shooting mode. The shooting modes also include a portrait shooting mode, landscape shooting mode, closeup shooting mode, sports shooting mode, and nightscape shooting mode. The mode dial 53 can selectively set one of these modes.

The mirror-up mode switch 57 switches between a mirror-up shooting mode and a normal shooting mode. In the mirror-up shooting mode, two modes can be selected: a mode in which the quick return mirror 26 moves down in every shooting and a mode in which once the quick return mirror 26 moves up, shooting can be performed continuously while keeping the quick return mirror up until a mirror-down instruction is received.

When the user presses a shutter button (not shown) halfway, the first shutter switch (SW1) 54 is turned on to instruct the start of an operation such as the AF process, AE process, AWB process, and/or EF process.

When the user presses the shutter button (not shown) fully, the second shutter switch (SW2) 55 is turned on to instruct the start of a series of shooting operations. The shooting operations include the mirror-up operation, shutter actuation, and mirror-down operation. The shooting operations also include a write process of writing image data from the image sensor 30 into the main memory 34, and a development process of executing development based on arithmetic processes by the image processing circuit 36 or memory control circuit 32. The shooting operations also include a read process of reading out image data from the main memory 34, an image data compression process by the compression/decompression circuit 35, and a recording process of writing image data in the first or second recording unit 6 or 7.

The playback switch 56 instructs the start of a playback operation of reading out captured images from the main memory 34 or first or second recording unit 6 or 7 and displaying them on the image display unit 39.

The operation unit 58 comprises various buttons, rotary dials, and a touch panel and has a menu button, setting button, macro button, multiwindow playback/page break button, flash setting button, and single shot/continuous shooting/self timer switch button. The operation unit 58 also has a menu move plus (+) button, menu move minus (-)button, playback image move plus (+) button, playback image move minus (-) button, image quality select button, exposure compensation button, and date/time setting button. The operation unit 58 also has a select/switch button which selectively sets various functions in shooting in, e.g., the panoramic mode or in executing playback, and a determination/execution button which sets determination and execution of various functions in shooting in, e.g., the panoramic mode or in executing playback. The operation unit 58 also has an image display switch which turns on/off the image display unit 39, and a quick review switch which sets a quick review function of automatically playing back captured image data immediately after shooting. The operation unit 58 also has a compression mode switch which selects an image sensor RAW mode in which the compression ratio of JPEG compression is selected, or a signal from the image sensor 30 is directly digitized and recorded on a recording medium. The operation unit 58 also has a mode setting switch which sets various function modes such as a playback mode, multiwindow playback/erase mode, and PC connection mode. The operation unit 58 also has an AF mode setting switch which selectively sets a one-shot AF mode or a servo AF mode as an AF mode when the user presses the first shutter switch (SW1) 54. In the one-shot AF mode, the AF operation starts, and once an in-focus state is obtained, that state is continuously held. In the servo AF mode, the AF operation is continuously performed while the user is pressing the first shutter switch (SW1) 54. The operation unit 58 also has a mirror-down switch which moves the mirror down when the mirror is up in the mirror-up mode.

As for the functions of the plus and minus buttons, the numerical values or functions can more easily be selected by providing a rotary dial switch.

An I/F unit 59 controls the interface operation to the lens unit 1.

The main body 102 incorporates I/F units 60 and 61. The I/F units 60 and 61 are connected, via the connectors 13 to 16, to the I/F units 4 and 5 connected to the first and second recording units 6 and 7 and control the interface operation to the recording unit side.

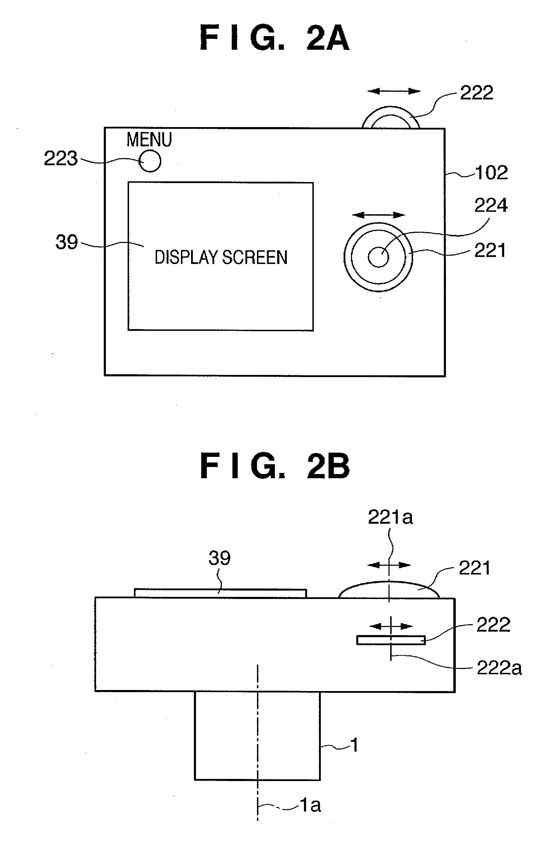

Fig. 2A is a view showing the outer appearance of the digital camera of Fig. 1 viewed from the rear side.

Referring to Fig. 2A, the main body 102 of the digital camera 100 has a first rotary dial 221 and a second rotary dial 222. The first and second rotary dials 221 and 222 are included in the operation unit 58 in Fig. 1. The first and second rotary dials 221 and 222 need not always be located at the positions in Fig. 2A and can be located anywhere if the user holding the digital camera can operate both dials with one hand. Reference numeral 39 denotes the image display unit shown in Fig. 1. Considering display items, the axis of rotation of the first rotary dial 221 is shifted slightly to the left of the axis of rotation of the second rotary dial 222 when the digital camera 100 is viewed from the rear side, as will be described later.

The main body 102 of the digital camera 100 includes not only the rotary dials but also a menu button (MENU button) 223. A set button (SET button) 224 is located at the center of the first rotary dial 221.

Fig. 2B is a view of the main body 102 of the digital camera 100 viewed from the upper side.

As shown in Figs. 2A and 2B, the axis of rotation 221a of the first rotary dial 221 and the axis of rotation 222a of the second rotary dial 222 are parallel to the photographing optical axis 1a of the lens unit 1. That is, the axis of rotation 221a of the first rotary dial 221 and the axis of rotation 222a of the second rotary dial 222 are parallel to each other. The axes of rotation 221a and 222a are perpendicular to the display surface of the image display unit 39.

As an example of the method of use of the first and second rotary dials, the first rotary dial 221 is used to select a menu main item or a shutter speed while the second rotary dial 222 is used to select a sub item or an f-number. A menu main item indicates, e.g., a folder that stores image data to be played back. A sub item indicates each image in the folder. In other words, the main item is a top level item, and the sub item is a lower level item of the main item.

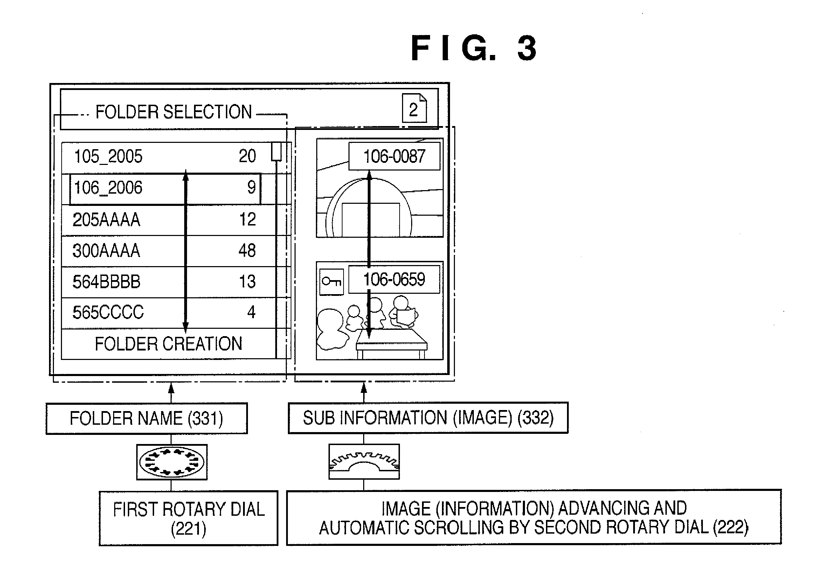

Fig. 3 is a view showing menu main items displayed on the image display unit 39 and sub items of a selected main item. Menu main items 331 are aligned in one direction. Sub items 332 are aligned in parallel to the alignment direction of the main items 331. In other words the sub items menu is aligned in the same direction as the main items menu.

The main items 331 are aligned vertically in line. The sub items 332 are also aligned vertically in line. The alignment of the main item 331 and that of the sub items 332 are displayed on the left and right sides, respectively, in the single display screen at the same time.

The first rotary dial 221 for selecting the main items 331 aligned on the left side is arranged on the left side of the digital camera 100 with respect to the second rotary dial 222 for selecting the sub items 332 aligned on the right side. That is, the displayed alignments of the main items and sub items correspond to the locations of the two dials.

The display of the main items and sub items can be modified in correspondence with the locations of the two dials. For example, assume that the first rotary dial is arranged on the lower side of the second rotary dial when viewed from the rear side. In this case, the main items are aligned horizontally in line, and the sub items are aligned horizontally in line above the main item alignment so that the displayed alignments correspond to the dial locations.

The main items 331 and sub item 332 are selected using the first and second rotary dials 221 and 222 in the following way. The main items 331 are selected by the first rotary dial 221, and the sub items 332 are selected by the second rotary dial 222. Alternatively, the main items 331 are selected by the second rotary dial 222, and the sub items 332 are selected by the first rotary dial 221.

The digital camera may have three or more rotary dials. In addition to the first and second rotary dials 221 and 222, a third rotary dial may be arranged on the portable electronic device to select the main items 331 and sub items 332.

In Fig. 3, the menu main items 331 are folder names. The sub items 332 are image data belonging to a folder selected by the first rotary dial.

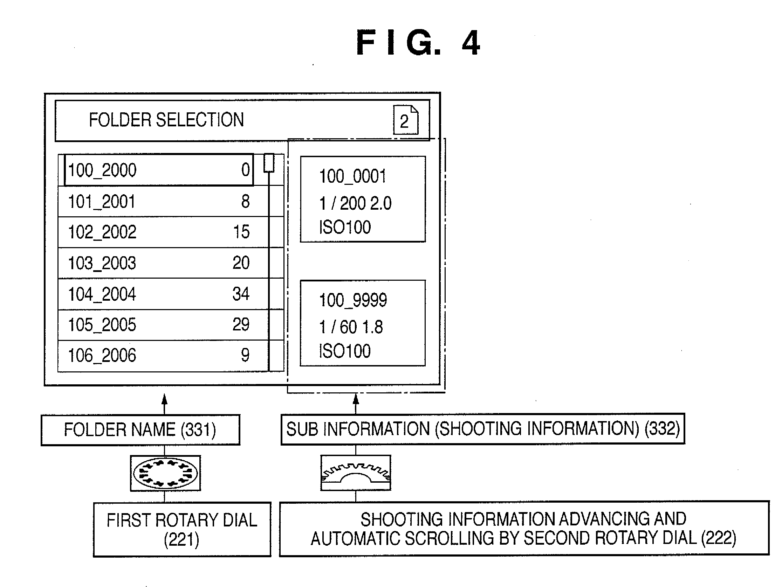

Fig. 4 is a view showing a state in which of the display items shown in Fig. 3, the sub items 332 are replaced with shooting information such as exposure information upon shooting images. The sub items 332 can be any other information as long as they belong to a folder selected from the main items 331.

The shooting information includes, e.g., exposure information, protect information, image size, audio file attachment, ON/OFF of DPOF (Digital Print Order Format) selection, transfer log, and Exif information.

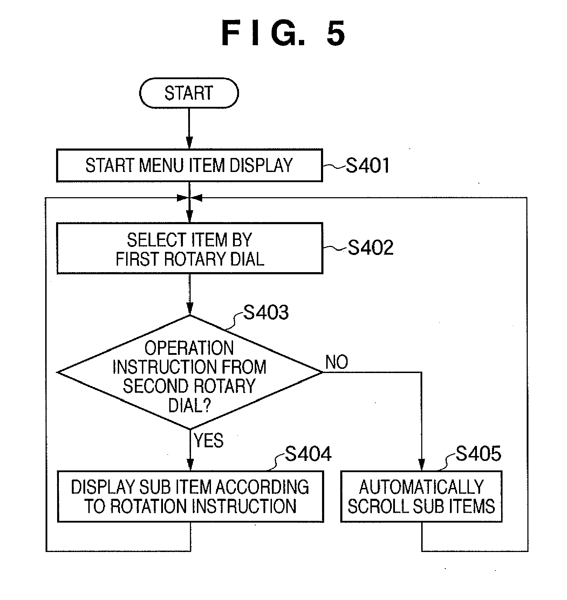

Fig. 5 is a flowchart illustrating an operation of automatically scrolling the sub items 332 in Fig. 3 when the second rotary dial 222 is not operated.

In step S401, the user presses the menu button 223 included in the operation unit 58 and selects a desired item from the menu displayed on the image display unit 39 by using the first or second rotary dial, thereby displaying the window in Fig. 3.

Next, the user selects a menu main item by the first rotary dial 221 (step S402).

It is determined whether the second rotary dial 222 is operated within a predetermined time after the stop of the operation of the first rotary dial 221 (step S403).

If the second rotary dial 222 is operated, the sub items are scrolled in accordance with the instructed number of rotations (step S404).

If the second rotary dial 222 is not operated, automatic scroll starts (step S405).

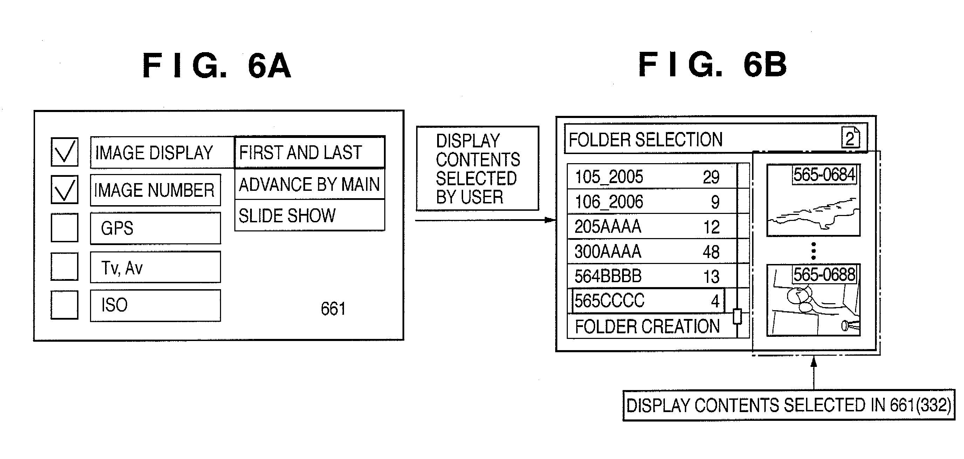

Fig. 6A is a view showing a window to select the display contents of the sub items 332 in Fig. 3. This window is displayed when the user presses the menu button 223 included in the operation unit 58 and selects the item "sub item settings" from the menu displayed on the image display unit 39 by using the first or second rotary dial.

The state shown in Fig. 6A indicates that the first and last images in a folder selected as a main item should be displayed in the right area (the area where the sub items are displayed) of the image display unit 39. A setting is also done to display the image numbers of the displayed first and last images. "GPS" in Fig. 6A is an item to select whether to display position information upon shooting images. "Tv, Av" is an item to select whether to display the shutter speed and f-number upon shooting images. "ISO" is an item to select whether to display the film speed upon shooting images.

When the settings in Fig. 6A are done, and the use selects a folder name by the first rotary dial 221 from the main items (folder names) displayed on the left side of the image display unit 39 in Fig. 6B, the following process is executed. Of images belonging to the selected folder name (in this example, 565CCCC), the first and last images are displayed in the sub item display area of the image display unit 39, and their image numbers are also displayed. When the user checks GPS, Tv, Av, and ISO in the window in Fig. 6A, these pieces of information are also displayed.

A whole operation of selecting a main item and a sub item by the first and second rotary dials will be described next.

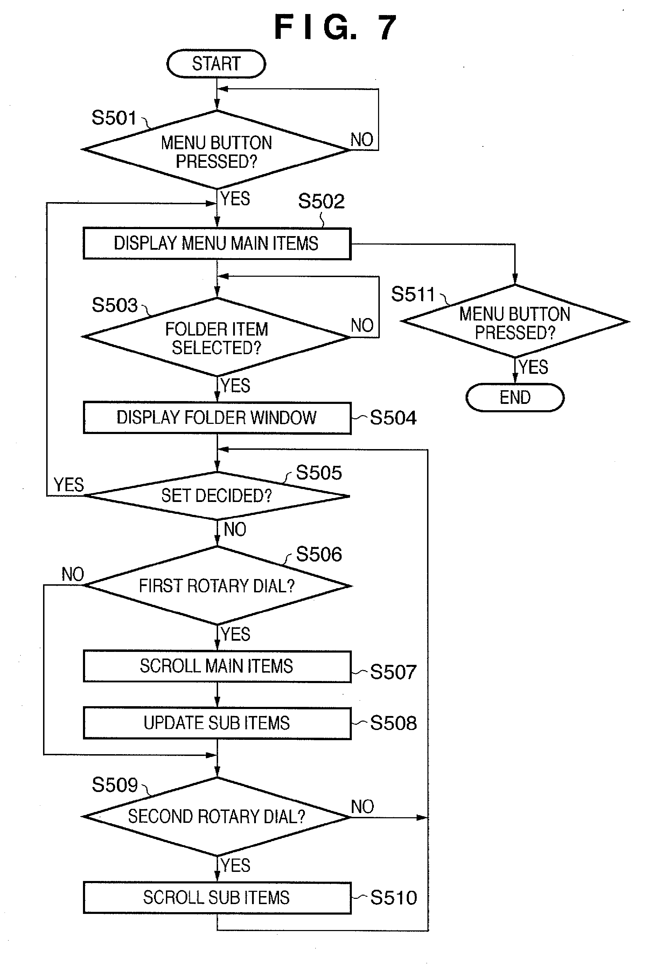

Fig. 7 is a flowchart illustrating an operation of selecting the main item 331 and sub item 332 shown in Fig. 3.

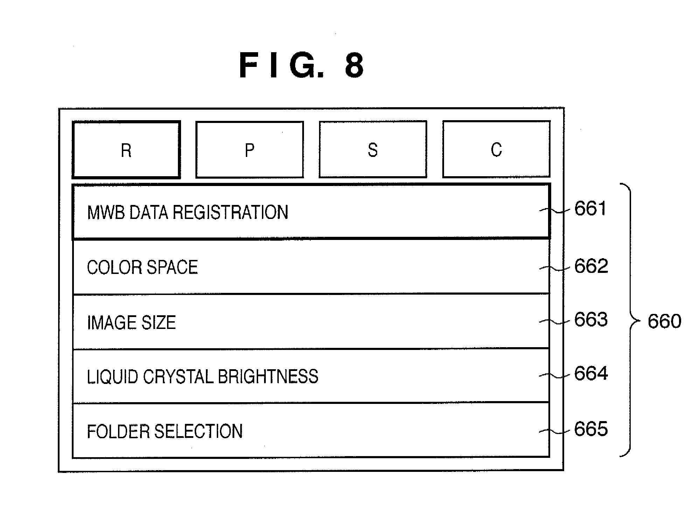

Referring to Fig. 7, when the menu button 223 is pressed in step S501, the digital camera (image capturing apparatus) 100 displays a menu window on the screen of the image display unit 39 (step S502). The menu window display will be described later with reference to Fig. 8.

If a folder item is selected in step S503, a folder window is displayed (step S504).

The folder window in step S504 indicates the window in Fig. 3 that displays the main items 331 and sub items 332.

If the set button 224 is pressed to select a folder in step S505, the process returns to menu main item display in step S502.

If the set button 224 is not pressed in step S505, the process advances to step S506.

If the first rotary dial 221 is rotated in step S506, the folder selected from the menu main items 331 is scrolled by the number of rotations or amount of rotation of the first rotary dial 221 (step S507).

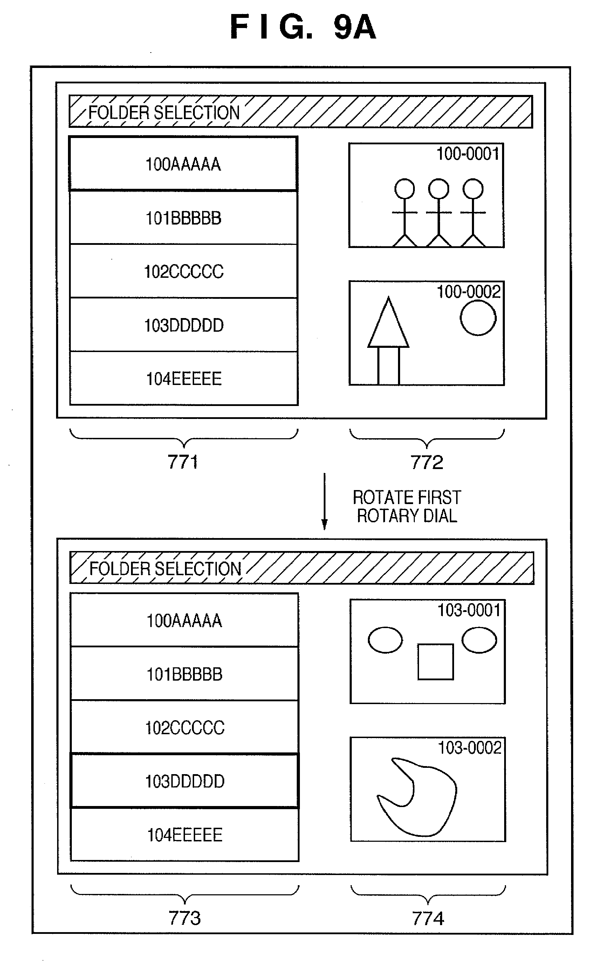

The display of the sub items 332 is updated to display image data belonging to the folder selected in step S507 (step S508). The operations in steps S507 and S508 will be described later with reference to Fig. 9A.

If the first rotary dial 221 is not rotated in step S506, the process advances to step S509.

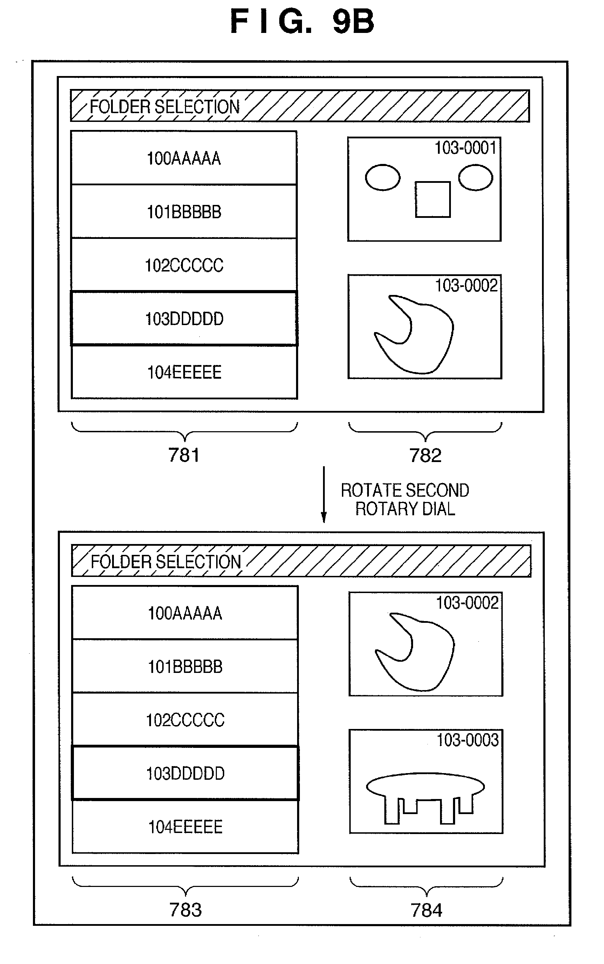

If the second rotary dial 222 is rotated in step S509, the sub items 332 are scrolled by the number of rotations or amount of rotation of the second rotary dial 222 (step S510). The operation in step S509 will be described later with reference to Fig. 9B.

If the second rotary dial 222 is not rotated in step S509, the process returns to step S505.

If the menu button 223 is pressed again in step S511, the digital camera (image capturing apparatus) 100 finishes the menu window display.

Fig. 8 is a view showing the menu window displayed in step S502 in Fig. 7.

Reference numeral 660 denotes all items of the menu window displayed when the menu button (MENU button) 223 is pressed.

Individual items are, e.g., MWB data registration 661, color space 662, image size 663, liquid crystal brightness 664, and folder selection 665.

However, the present invention is not limited to the above items, and various items related to the function settings of the portable electronic device can be included.

For example, the digital camera (image capturing apparatus) 100 shown in Fig. 1 has various items such as white balance setting, white balance bracket setting, shooting mode selection, JPEG image quality selection, automatic power-off setting, card initialization, date setting, battery information check, and electronic flash setting.

The menu window 660 corresponds to the menu main items 331 (upper layer or level) shown in Fig. 3.

In this case, MWB data registration users 1 to 5 and folders correspond to the lower layer or level. The relationship between them will be described later with reference to Figs. 9A and 9B.

The first rotary dial 221 and second rotary dial 222 shown in Figs. 2A and 2B can be used to select an upper layer item and lower layer item of the menu. Hence, the first rotary dial 221 can be used to select one of the items 660, and the second rotary dial 222 can be used to select a folder.

Fig. 9A is a view for explaining the operation in steps S507 and S508 in Fig. 7.

Display areas 771 and 773 display menu main items. Display areas 772 and 774 display sub items.

Items "100-0001" and "100-0002" displayed in the display area 772 are the sub items of the main item "100AAAAA" selected in the display area 771.

When the user rotates the first rotary dial 221 for moving the menu main items, the main item "100AAAAA" selected in the display area 771 is moved (scrolled) so that main item "103DDDDD" is selected in the display area 773.

The first rotary dial 221 is designed to click at a number of predetermined angles as it rotates. When the user rotates the first rotary dial 221 until it clicks once, the selection moves by one item. Hence, to select the main item "103DDDDD" from the main item "100AAAAA", the user rotates the first rotary dial 221 until it clicks three times.

When the first rotary dial 221 is rotated, the sub items "103-0001" and "103-0002" of the main item "103DDDDD" are displayed in the display area 774.

Fig. 9B is a view for explaining the operation in step S510 in Fig. 7.

Display areas 781 and 783 display menu main items. Display areas 782 and 784 display sub items.

Items "103-0001" and "103-0002" displayed in the display area 782 are the sub items of the main item "103DDDDD" selected in the display area 781.

When the user rotates the second rotary dial 222 for moving the sub items, the display items displayed in the display area 782 are moved (scrolled), and the items "103-0002" and "103-0003" are displayed in the display area 784.

The second rotary dial 222 is also designed to click at a number of predetermined angles as it rotates, like the first rotary dial 221. When the user rotates the second rotary dial 222 until it clicks once, the sub items move by one item. Hence, to move the sub items by one item, the user rotates the second rotary dial 222 until it clicks once.

Since the first rotary dial 221 is not rotated, the display areas 781 and 783 display the same contents.

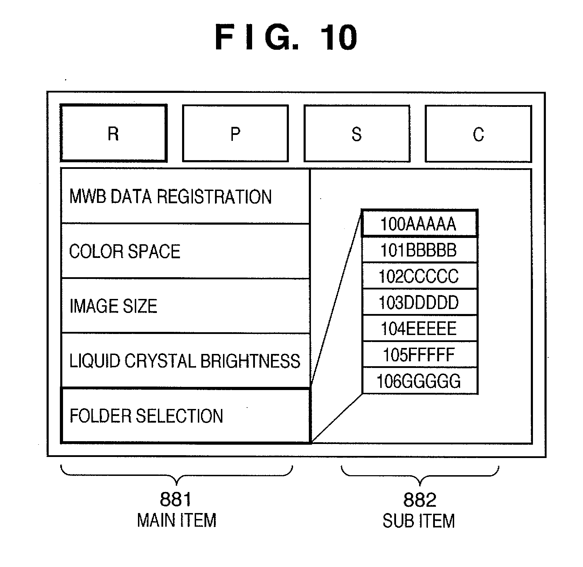

Fig. 10 is a view showing a state in which digital camera function setting items such as MWB data registration, color space, image size, liquid crystal brightness, and folder selection are displayed as menu main items (331 in Fig. 3) (display area 881), and the contents belonging to the main items are displayed as sub items (332 in Fig. 3) (display area 882).

In Fig. 10, emphasis is placed on "folder selection" of the menu main items. The contents in the sub item display area 882 are "folder names" belonging to the item "folder selection".

When the user rotates the first rotary dial 221 to move focus to the next item "MWB data registration", the sub items "users 1 to 5" of "MWB data registration" are displayed in the display area 882.

When the user further rotates the first rotary dial 221 to move focus to the next item "color space", the sub items "sRGB" and "adobe RGB" of "color space" are displayed in the display area 882.

This also applies to "image size" and "liquid crystal brightness".

In the above embodiment, the main items are folder names, and the sub items are file names in a folder. However, the present invention is not limited to this. The main items may be setting items to set the state of the camera, and the sub items may be the setting items of the lower layer of the setting items. More specifically, for example, the main items may be shooting modes of the camera, and the sub items may be setting items such as "single shot" and "continuous shooting" of the lower layer of a shooting mode menu.

As described above, according to the embodiment, the main items and sub items displayed in parallel to each other on the image display unit 39 can be selected by different rotary dials. This increases the degree of freedom in item selection and the convenience for the user. Additionally, since the rotational direction of the rotary dials matches the alignment direction of the items, the user can select an item intuitively.

The user can operate the first and second rotary dials with one hand. Hence, the ease of item selection can be improved.

The locations of the first and second rotary dials are associated with the locations of the items to be selected. This provides intuitive operability.

The first and second rotary dials can also be used as an exposure selection dial. Hence, the number of dials on the digital camera can be reduced.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A portable electronic device (100) comprising:
display means (39) for displaying, side by side, a plurality of main items (331) aligned in one direction as selectable setting items of the portable electronic device and a plurality of sub items (332) aligned in said one direction as selectable setting items of a lower layer of the main items menu;
a first rotary dial (221) which enables selection of at least one of the plurality of main items; and
a second rotary dial (222) which enables selection of at least one of the plurality of sub items,
wherein said first rotary dial and said second rotary dial are arranged to have respective axes of rotation which are parallel to each other and perpendicular to said one direction.

2. The device according to claim 1, wherein said first rotary dial and said second rotary dial are arranged at positions to enable a user who is holding the portable electronic device to execute selection with one hand.

3. The device according to claim 1 or 2, wherein the positional relationship between the alignment of the plurality of main items and the alignment of the plurality of sub items which are simultaneously displayed corresponds to the positional relationship between said first rotary dial and said second rotary dial.

4. The device according to any preceding claim, wherein
the portable electronic device is an image capturing apparatus, and
said first rotary dial and said second rotary dial are used to set exposure of the image capturing apparatus.

5. The device according to any one of claims 1 to 3, wherein
the portable electronic device is an image capturing apparatus, and
the plurality of main items are a plurality of folder names, and the plurality of sub items are a plurality of images belonging to a folder selected by said first rotary dial.

6. The device according to any one of claims 1 to 3, wherein
the portable electronic device is an image capturing apparatus, and
the plurality of main items are a plurality of folder names, and the plurality of sub items are information relating to a plurality of images belonging to a folder selected by said first rotary dial.

7. The device according to any preceding claim, wherein when a scrolling operation by said second rotary dial is not performed in a predetermined time, the plurality of sub items are automatically scrolled.

8. The device according to any preceding claim, wherein the type of the plurality of sub items is selectable by a user.
